# EUROPÄISCHE PATENTSCHRIFT

(11) **EP 2 171 336 B1**
(45) Veröffentlichungstag und Bekanntmachung des Hinweises auf die Patenterteilung: **02.01.2013**
(21) Anmeldenummer: 08716596.5
(22) Anmeldetag: 18.03.2008
(51) Int. Cl.: F16L 21/08, F16L 47/12, F16L 47/03, B29C 65/34, B29K 305/00

(54) **ROHRVERBINDUNG MIT EINEM GEHÄUSE EINER ARMATUR**
TUBE CONNECTION HAVING AN ARMATURE HOUSING
RACCORD TUBULAIRE DOTÉ D'UN BOÎTIER POUR ROBINETTERIE

(30) Priorität: 20.07.2007 AT 11602007; 18.02.2008 AT 2592008
(43) Veröffentlichungstag der Anmeldung: 07.04.2010
(73) Patentinhaber: E. Hawle Armaturenwerke GmbH, 4840 Vöcklabruck (AT)
(72) Erfinder: POHN, Franz, Johann, 4840 Vöcklabruck (AT); BERGER, Christian, 4650 Lambach (AT)
(74) Vertreter: Puchberger, Peter
(86) Internationale Anmeldenummer: PCT/EP2008/002136
(87) Internationale Veröffentlichungsnummer: WO 2009/012823

(56) Entgegenhaltungen:
- DE-A1- 3 043 423
- DE-A1- 10 306 316
- DE-B3-102005 024 590
- DE-C1- 4 342 302
- FR-A- 1 520 734
- US-A- 5 895 078
- US-A- 6 142 484
- US-A1- 2007 134 980
- DATABASE WPI Week 200653 Thomson Scientific, London, GB; AN 2006-518232 XP002482774 -& NL 1 027 089 C2 (FISCHER WAGA NV GEORG) 27. März 2006 (2006-03-27)

## Beschreibung

Die Erfindung betrifft eine Rohrverbindung wie sie im Oberbegriff des Anspruches 1 beschrieben ist.

Aus dem Dokument DE 103 06 316 A1 ist eine Muffenrohrverbindung bekannt, bei der in einer umlaufenden Aufnahmenut der Nut der Muffe ein das in die Muffe eingeführte Einsteckende eines Rohres dichtend umfassender Dichtring angeordnet ist, der einstückig aus einem, auf eine Geometrie der Aufnahmenut abgestimmten Haltebereich und einen Dichtbereich aufweist, wobei der Dichtbereich eine geringere Härte aufweist, als der Haltebereich. Die Muffe weist im Stirnendbereich eine weitere Nut auf, in der Rückhalteriegel als Auszugssicherung für das Rohr eingesetzt sind.

Weiters ist aus dem Dokument US 6,142,484 A ein Stütz- und Dichtring, bestehend aus zumindest zwei miteinander verbundenen, aus unterschiedlichen Materialien bestehender Dichtungsring bekannt. Der etwa konusringförmig geformte Stützring ist durch ein im Wesentlichen nicht elastisches Material gebildet und an einer etwa in einer senkrecht zu einer Zentrumsachse senkrecht ausgerichteten Basisfläche der Dichtring aus einem elastisch verformbaren Material angeformt. Der Stützring ist weiters mit keilförmig vorragenden, über den Umfang verteilten Versteifungsrippen versehen. Das Dichtelement weist weiters in einer Durchgangsbohrung eine in Richtung der Zentrumsachse die innere Oberfläche überragende ringförmige Dichtlippe auf.

Weiters sind elektrische Schweißmuffen bekannt, bestehenden aus einem Hülsrohr aus Kunststoff, zum thermischen Verbinden von Einsteckenden von Kunststoffrohren. Das Hülsrohr weist eingebettet in die Wand ein elektrisches Widerstands- Heizelement mit Anschlüssen für eine Anspeisung mit elektrischer Energie auf. In das Hülsrohr werden die zu verbindenden Rohrenden eingesteckt und durch einen Anschmelzvorgang thermisch an gegenüber liegenden Stirnflächen einerseits und mit dem Hülsrohr andererseits verbunden.

Aus der DE 4 343 302 C1 ist eine zugfeste Rohrverbindung mit einer Muffe aus Kunststoff bekannt, die einen darin angeordneten Dichtring aufweist und einen Haltering umfasst. Der Haltering ist als Elektroschweißring ausgebildet. Aus der FR 1 520 734 ist eine Rohrverbindung bekannt, wobei ein Einsteckende einen schlitzförmigen Wandausschnitt aufweist, der das radiale Einsetzen eines Rückhalterings erlaubt. Der schlitzförmige Wandausschnitt erstreckt sich über einen zumindest halbkreisförmigen Querschnittssektor.

Aus der US 2007/0134980 A1 ist eine Rohrverbindung offenbart, die aus einer Muffe und einem mechanisch zusammenpressbaren Klemmring besteht. Die DE 3043423 A1 zeigt ebenfalls eine gattungsgemäße Rohrverbindung mit einem mechanisch zusammenpressbaren Klemmring.

Schließlich zeigt die US 5 895 078 eine Rohrverbindung, wie sie im Oberbegriff des Anspruchs 1 beschrieben ist. Zwar ist aus dieser Druckschrift ein Verriegelungsring bekannt, dieser bedarf jedoch eines weiteren axial versetzt angeordneten Klemmrings. Eine Montage in beengten Platzverhältnissen wird dadurch erschwert.

Aufgabe der Erfindung ist es, eine zuggesicherte Muffenrohrverbindung zu schaffen, mit der eine einfache Montage unter Anwendung voneinander unterschiedlicher die Auszugssicherheit herstellender Elemente ermöglicht werden soll. Die Muffenrohrverbindung soll auch bei engen Platzverhältnissen herstellbar sein.

Diese Aufgabe der Erfindung wird durch die im Kennzeichenteil des Anspruches 1 wiedergegebenen Merkmale erreicht. Der überraschende Vorteil dabei ist, dass damit eine Rohrverbindung geschaffen ist, die eine wahlweise Anwendung unterschiedliche ausgebildeter und für den jeweiligen Einsatzfall angepasster Rückhalteringe sowohl für eine unlösbare als auch eine lösbare Rohrverbindung ermöglicht.

Gemäβ der ersten erfindungsgemäβen Ausbildung ist der Rückhaltering durch einen mit dem Einsteckende durch einen Anschmelzvorgang thermisch verbindbaren Kunststoffring gebildet und in dem den Rückhaltering bildenden Kunststoffring ein elektrisches Heizelement angeordnet. Dadurch wird eine Auszugssicherung für die Aufnahme hoher Auszugskräfte für eine unlösbare Rohrverbindung erreicht.

Gemäβ der zweiten erfindungsgemäβen Ausbildung ist der Rückhaltering als ein in die Innennut einlegbarer und auf das Einsteckende des Rohres aufsteckbarer Klemmring ausgeführt, der durch eine Klemmvorrichtung auf das Rohr anklemmbar ist.

Gemäß den weiteren vorteilhaften Ausbildungen kann das Einsteckende den Rückhaltering um einen Überstand in Einsteckrichtung des Einsteckendes beabstandet in einer Ringnut ein das Einsteckende umfangsseitig umfassender Dichtungsring, bevorzugt ein Lippendichtring, angeordnet. Der Dichtungsring ist mit dem Rückhaltering verbundne und insbesondere an diesem angeformt. Weiters ist der Dichtungsring aus einem zum Material des Rückhalteringes höhere Elastizität aufweisendem Material gebildet. Für eine einfache Montage wird sowohl eine auszugssichere wie auch eine druckdichte Rohrverbindung erreicht.

Möglich sind aber auch Ausbildungen, bei welchen zumindest ein den schlitzförmigen Wandausschnitt in axialer Richtung überspannendes und beidseits des Wandausschnitts des Muffenabschnittes verankertes Brückenelement vorgesehen ist, welches lösbar am Muffenabschnitt befestigt, insbesondere mit diesem verschraubt ist, weil dadurch eine rausmsparende Dimensionierung einer Armatur bei Erreichung einer hohen Gehäusefestigkeit erreicht wird.

Weiters ist der Rückhaltering in radialer Richtung elastisch verformbar ausgebildet. Diese vorteilhafte Ausbildung gewährleistet eine selbststätige, koaxiale Zentrierung des Rückhalteringes in der Ringnut der Anschlussmuffe und damit einer Vereinfachugn des Montagevorganges.

Der Rückhaltering ist an einer inneren Umfangsoberfläche mit verzahnungsartigen Rückhaltemitteln versehen, welche durch in den Rückhaltering eingeformte, insbesondere hochfeste, an der inneren Umfangsoberfläche eine Verzahnung aufweisende Einformelemente gebildet sind. Diese Rückhaltemittel bestehen aus einem zum Material des Rückhalteringes eine höhere Festigkeit aufweisenden Material, insbesondere aus einem metallischen Werkstoff. Weiters ist der Rückhaltering über einen Keilspannring in radialer Richtung gegen die äußere Rohrumfangsfläche gepresst oder pressbar. Der Keilspannring ist über einen Flansch und diesen durchragenden Spannschrauben in der Anschlussmuffe angeordneten stirnseitigen Gewindebohrungen verstellbar befestigt. Durch die in diesen Ansprüchen beschriebenen vorteilhaften Weiterbildungen wird eine hohe Auszugskräfte aufnehmende lösbare Rohrverbindung mit einer Armatur erreicht.

Der Rückhaltering ist durch Kreisbogenringsegmente gebildet, weil dadurch eine Anpassung einheitlich geformter Kreisbogensegmente für in einem vorgegebenen Bereich variierende Rohrdurchmesser erreicht wird.

Die Breite des Wandausschnitts entspricht etwa der Breite der Innennut. Die Schlitzweite des Wandausschnitts ist kleiner als der Außendurchmesser des Rückhalteringes. Dadurch wird eine nahezu spielfreie Halterung des Einsteckendes in der Anschlussmuffe erreicht.

Weiters kann der Muffenabschnitt rohrförmig ausgebildet und neben der kreisförmigen auch eine ovale oder mehreckige Querschnittsform aufweisen. Dies sind vorteilhafte Varianten für die Gehäuseausbildung im Bereich der Innennut für die auszugssichere Verbindung mit dem Rohrende.

Vorteilhaft sind aber auch die Ausbildungen, bei denen der Rückhaltering C-förmige ausgebildet ist und über einen Teilbereich seiner Breite über einen Umfang verteilt radial verlaufende Einschnitte aufweist. Dadurch wird eine radiale Elastizität des Rückhalteringes für eine Montagevereinfachung auch bei einem hochfesten Material für diesen erreicht.

Möglich ist auch eine Ausbildung, bei der im Bereich des Wandausschnittes zumindest ein, in axialer Richtung verlaufender, einen Wulstrand mit dem Muffenabschnitt verbindender Zuganker, z.B. Schraube angeordnet ist, der zur Stabilität des Muffenabschnittes und Gewährleistung einer hohen Widerstandskraft gegen auftretende Auszugskräfte wirkt.

Der Rückhaltering ist mit dem angeformten Dichtungsring durch einen Zweikomponenten-Spritzteil gebildet und gemäß der beschriebenen vorteilhaften Ausbildung wird ein fertigungstechnisch insbesondere für eine Serienfertigung wirtschaftlich herstellbarer Rückhaltering in Kombination mit einem Dichtring erreicht.

Die Anschlussmuffe ist Bestandteil eines Anschlussrohres und Bestandteil eines Gehäuses wie Ventilgehäuse, Schiebergehäuse und dergleichen.

Schließlich ist das Gehäuse oder Anschlussrohr aus Kunststoff gebildet und besteht aus metallischem Werkstoff, insbesondere aus einem Gusswerkstoff. Diese Ansprüche beschreiben vorteilhafte Weiterbildungen, wodurch der Anwendungsbereich der Rohrverbindung auf unterschiedliche Anwendungsfälle ausgeweitet wird.

Alle vorgenannten Merkmale können alternativ und in beliebigen Kombinationen vorgesehen werden.

Zum besseren Verständnis der Erfindung wird diese anhand der in den Figuren gezeigten Ausführungsbeispiele näher erläutert.

Es zeigen:
- Fig. 1: eine erfindungsgemäße Rohrverbindung an einer Anschlussmuffe eines Gehäuses eines Schiebers in Ansicht, geschnitten;
- Fig. 2: einen Teilbereich der erfindungsgemäßen Rohrverbindung in Draufsicht;
- Fig. 3: eine andere Ausbildung der erfindungsgemäßen Rohrverbindung, in Ansicht, geschnitten.
- Figur 4 und 5: zeigen Schnittdarstellungen wie Figur 1 und 3, wobei die Anschlussmuffe an einem Anschlussrohr sitzt.
- Fig. 6: zeigt eine Schnittdarstellung mit einer besonderen Ausbildung des Dichtungsringes
- Fig. 7 und 8: zeigen in zwei Schnitten eine weitere Ausführungsform des Rückhalteringes.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese bei einer Lageänderung sinngemäß auf die neue Lage zu übertragen.

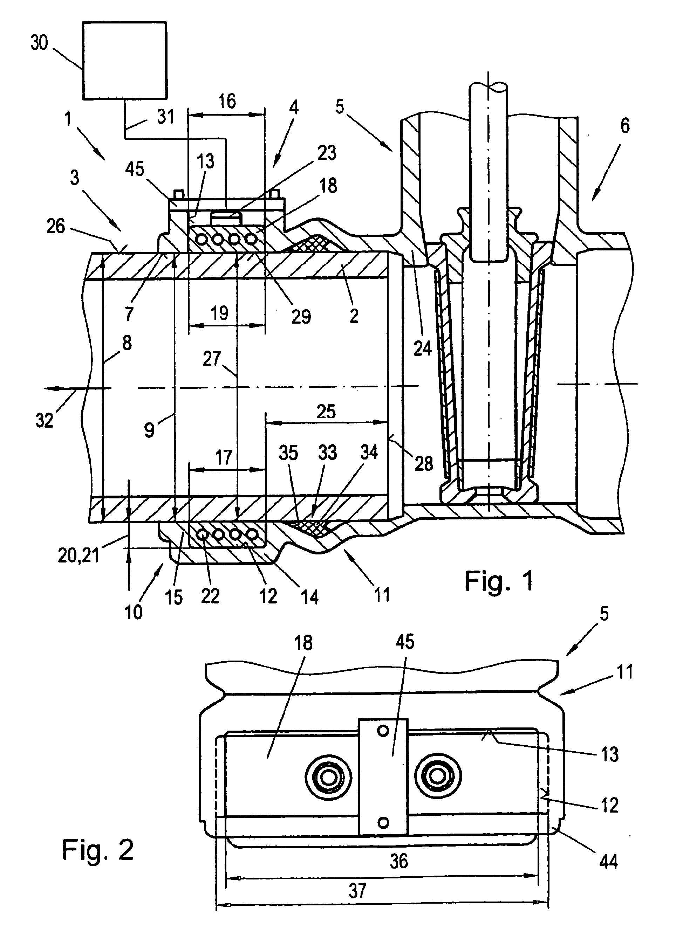

In den Fig. 1 und 2 ist eine Rohrverbindung 1 für einen auszugsfestem Anschluss eines Einsteckendes 2, insbesondere eines Kunststoffrohres 3, an ein eine Anschlussmuffe 4 aufweisenden Gehäuse 5 eines Schiebers gezeigt.

Das gezeigte Ausführungsbeispiel zeigt die Rohrverbindung 1 zum Verbinden des Einsteckendes des Rohres 2 mit der Anschlussmuffe 4 des Gehäuses 5 eines Absperrschiebers 6, bei der das Einsteckende 2 in der Muffenöffnung 7 auszugsfest und gegebenenfalls druckdicht aufgenommen ist.

Das Gehäuse 5 mit der Anschlussmuffe 4 ist durch einen einstückigen Bauteil, z.B. aus nichtmetallischem oder metallischem Werkstoff, insbesondere als Spritz- oder Gussteil gebildet.

Beim Einsteckende 2 des Rohres handelt es sich um ein sogenanntes glattes Spitzende mit einem Außendurchmesser 8, der geringfügig kleiner ist als ein Durchmesser 9 der Muffenöffnung 7 des Gehäuses 5 im Bereich der Anschlussmuffe 4, sodass das Einsteckende eingeschoben werden kann.

An einem stirnseitigen Endbereich 10 ist die Anschlussmuffe 4 in Form eines zylindrischen oder ovalen oder mehreckigen Muffenabschnittes 11 ausgebildet, welcher eine Innennut 12 mit einem etwa rechteckförmigen Querschnitt aufweist.

Im Bereich der Innennut 12 ist der Muffenabschnitt 11 über einen Teilbereich eines Umfanges erstreckend mit einem schlitzförmigen Wandausschnitt 13 versehen. Die Innennut 12 wird einerseits durch eine Ausformung 14 des Muffenabschnittes 11 in Richtung des Gehäuses 5 und eine Einformung 15 in axialer Richtung begrenzt und die in axialer Richtung gemessene Breite 16 des Wandausschnitts 13 ist nach dem gezeigten Ausführungsbeispiel etwa gleich der Breite 17 der Innennut 12.

Die Innennut 12 ist ausgelegt zur Aufnahme eines das Einsteckende 2 umfangsseitig umfassenden Rückhalteringes 18 mit einem in etwa rechteckförmigen Querschnitt mit einer Breite 19, die gering kleiner ist als die Breite 16 des Wandausschnittes 13, und mit einer Ringhöhe 20 entsprechend einer Nuttiefe 21 der Innennut 12, d.h. der Rückhaltering 18 ist in seiner Dimensionierung hinsichtlich seiner Ringbreite 17 und seiner Ringhöhe 20 etwa auf den Querschnitt der Innennut 12 ausgelegt.

Der Rückhaltering 18 ist vom Typ her ein sogenannter Kunststoff-Aufschweißring, der in den Querschnitt eingebettet, ein elektrisches Widerstands-Heizelement 22 mit nach außen geführten Elektroanschlüssen 23 aufweist.

Die auszugssichere Rohrverbindung 1 wird durch Einlegen des Rückhalteringes 18 von außen durch den Wandausschnitt 13 hindurch in die Innennut 12 und danach durch Einführen des Einsteckendes des Rohres 2 in die Muffenöffnung 7 des Gehäuses 5 vorgenommen, wobei das Einsteckende 2 den Rückhaltering 18 in Richtung eines Bohrungsansatzes 24 im Gehäuse 5, der bevorzugt als Begrenzung eines Überstandes 25 für das Einsteckende 2 dient, überragt.

Durch Einstecken des Einsteckendes 2 in die Muffenöffnung 7 der Anschlussmuffe 4 gelangt der in der Innennut 12 eingelagerte Rückhaltering 18 auf das Einsteckende 2, wobei ein nahezu spielfreier Sitz und sattes Anliegen an der Oberfläche 26 dadurch erreicht wird, dass bevorzugt der Innendurchmesser 27 des Rückhalteringes 18 gering kleiner ist als der Außendurchmesser 8 des Einsteckendes 2.

Nachdem das Einsteckende 2 mit einer dem Gehäuse 5 zugewandten Rohrstirnftäche 28 zur Erreichung des Überstandes 25 in üblicher Weise an den Bohrungsansatz 24 angelegt ist, wird durch ein bereichsweises Aufschmelzen der Oberfläche 26 und der dieser zugewandten Ringfläche 29 des Rückhalteringes 18 durch Zuführen einer Elektroenergie aus einem Energieerzeuger 30 und einer Leitung 31 dem Widerstands-Heizelements 22 des Rückhalteringes 18, ein thermischer Verbindungsprozess zwischen dem Rückhaltering 18 und dem Einsteckende 2 erreicht und damit eine unlösbare, hohe Auszugskräfte - gemäß Pfeil 32 - aufnehmende Rohrverbindung 1 hergestellt.

Wie nun weiters noch der Fig. 1 zu entnehmen ist, weist der Muffenabschnitt 11 in Richtung des Gehäuses 5 beabstandet zur Innennut 12 eine weitere Ringnut 33 auf, in der ein das Einsteckende 2 umfangseitig umfassender Dichtungsring 34, insbesondere Lippen-dichtring 35, angeordnet ist, wodurch die Rohrverbindung 1 sowohl eine auszugsfeste wie auch druckdichte Verbindung des Einsteckendes 2 mit dem Gehäuse 5 der Armatur 6 bildet.

Wie nun weiters der Fig. 2 zu entnehmen, erstreckt sich der Wandausschnitt 13 über einen Teilbereich des Umfanges des Muffenabschnittes 11, wobei der Teilbereich gering kleiner ist, als der halbe Umfang des Muffenabschnittes 11. Dadurch ist eine in radialer Richtung gemessene Schlitzweite 36 des Wandausschnittes 13 etwas kleiner als der Außendurchmesser 37 des Rückhalteringes 18. In Verbindung mit einer materialbedingten geringen Verformbarkeit des Rückhalteringes 18 ist dennoch ein Einführen des Rückhaltringes 18 in die Innennut 12 durch den Wandausschnitt 13 hindurch gewährleistet und sichert dies nach einer Auffederung einen zu der Muffenöffnung 7 exakt koaxialen Sitz des Rückhalteringes 18 und gewährleistet weiters eine einfache Montage.

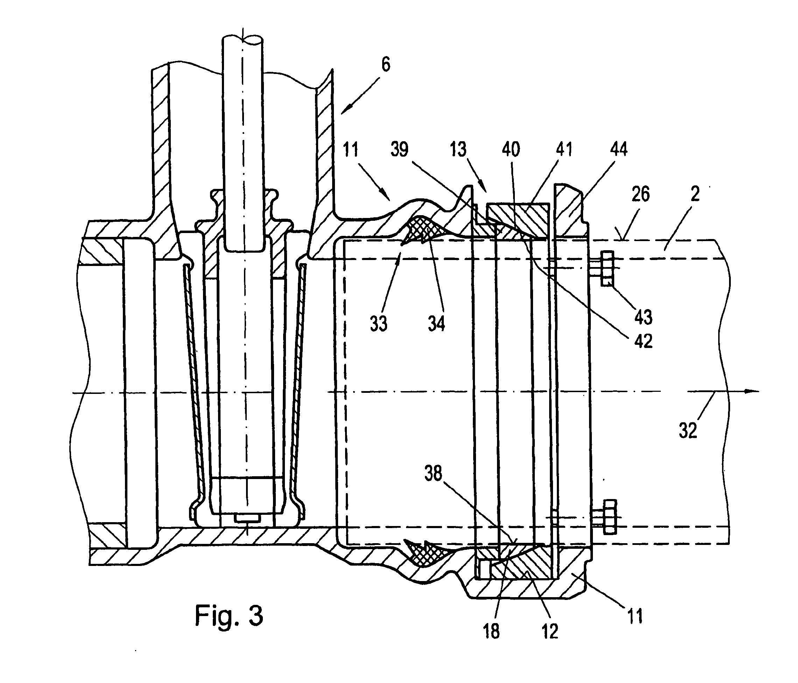

In der Fig. 3 ist eine weitere Ausbildung der Rohrverbindung 1 des in unterbrochenen Linien dargestellten Einsteckendes 2 an den Schieber 6 gezeigt. Der Muffenabschnitt 11 ist wie bereits in den vorhergehenden Figuren beschrieben, mit dem schlitzförmigen Wandausschnitt 13 versehen und die geometrische Ausgestaltung des Muffenabschnittes 11 mit dem Wandausschnitt 13 entspricht der zuvor in den Fig. 1 und 2 beschriebenen Ausbildung. Ebenfalls ist der Fig. 3 der ebenfalls bereits zuvor beschriebene, in die Ringnut 33 für einen druckdichten Rohranschluss vorgesehene Dichtungsring 34. z.B. der Lippendichtring 35 zu entnehmen.

Die auszugsfeste Verbindung wird mittels des Rückhalteringes 18, mit an einer inneren Umfangsfläche 38 vorgesehenen und der Oberfläche 26 des Einsteckendes 2 zugewandten Rückhaltemitteln 38, erreicht.

Den Rückhaltering 18 an einem konusförmigen Fortsatz 40 umfassend ist in der Innennut 12 des Muffenabschnittes 11 ein Keilspannring 41 mit einer konisch verlaufenden Innenfläche 42 vorgesehen.

Der Keilspannring 41 wird nach dem gezeigten Ausführungsbeispiel mittels Spannschrauben 43, welche in Gewindebohrungen eines stirnseitigen Wulstrandes 44 des Muffenabschnittes 11 angeordnet sind und diesen durchragen, gegen den konusförmigen Ansatz 40 des Stützringes 18 verstellt. Dabei wird durch eine elastische Verformung dieser Ansatz 40 mit dem Rückhaltemitteln 39 in radialer Richtung gegen die Oberfläche 26 des Einsteckendes 2 gepresst, wobei die Rückhaltemittel 39, die gegenüber dem Rohrmaterial eine größere Festigkeit aufweisen, in die Oberfläche 26 eindringen, und damit die Rückhaltesicherheit gegenüber einer Auszugskraft - gemäß Pfeil 32 - erreicht wird.

Der Fig. 2 ist auch noch zu entnehmen, dass zur Minimierung der Baumaße des Gehäuses 5 bzw. der Anschlussmuffe 4, bei Gewährleistung der Aufnahme einer hohen Auszugskraft, vorteilhaft zumindest ein den Wandausschnitt 13 in axialer Richtung überspannendes Brückenelement 45 vorgesehen sein kann, welches am Muffenabschnitt 11, beidseits des Wandausschnittes 14 lösbar befestigt, z.B. verschraubt ist.

Selbstverständlich kann anstelle des Brückenelementes 45, auch stirnseitig den Wulstrand 44 durchragend zumindest eine, in eine Gewindebohrung des Muffenabschnittes 11 eingreifende Schraube den Wandausschnitt 13 querend als Zuganker vorgesehen sein.

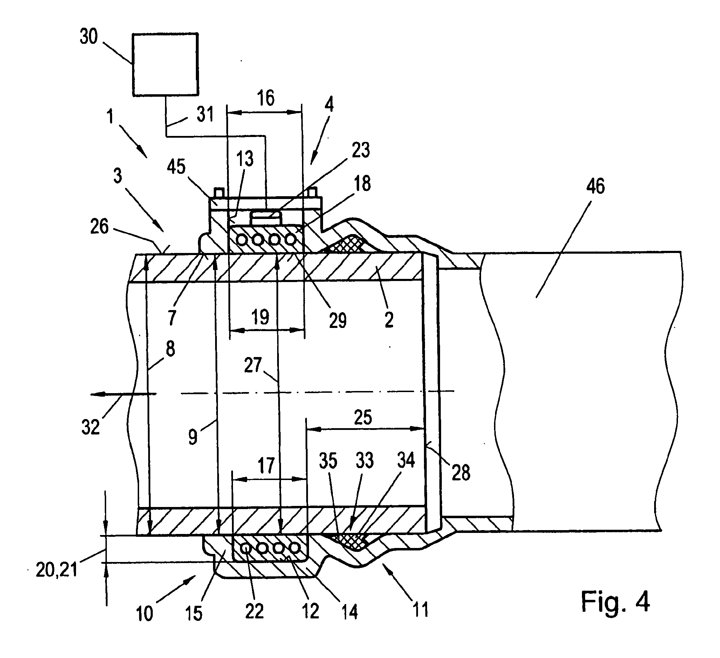

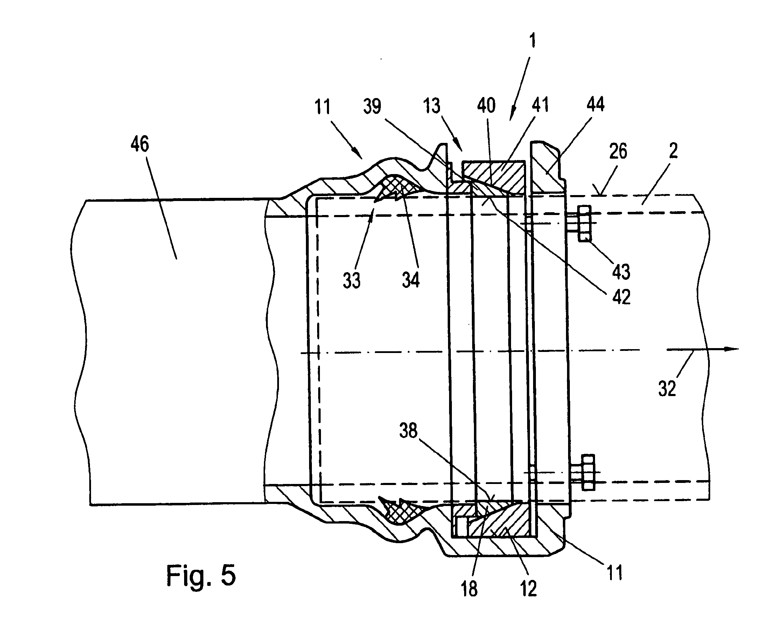

Wie den Figuren 4 und 5 zu entnehmen ist, kann die erfindungsgemäße Rohrverbindung vorteilhaft zur Verbindung von Rohren dienen, die nicht unmittelbar Bestandteil von Armaturgehäusen sind. Die Figuren 4 und 5 entsprechen weitgehend den Figuren 1 und 3, wobei gleiche Bezugszeichen gleiche Teile bezeichnen. Anstelle des Gehäuses 5 des Schiebers 6 sitzt die Anschlussmuffe 4 an einem Anschlussrohr 46. Ansonst trifft die Beschreibung zu den Figuren 1 bis 3 auf die Figuren 4 und 5 zu.

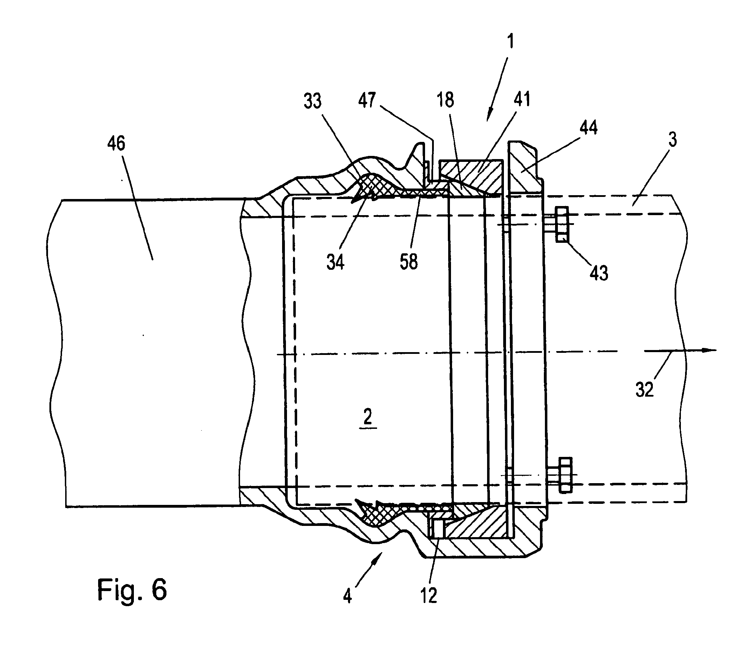

Die Schnittzeichnung der Fig. 6 entspricht weitgehend jener der Fig. 5, wobei dargestellt ist, wie der Dichtungsring 34 über einen Verbindungsstreifen 58 mit dem Rückhaltering 18 und/oder dem vorgelagerten Abstandselement 47 verbunden sein kann. Das Abstandselement 47 dient dazu, den Rückhaltering 18 daran zu hindern, in Richtung zum linken Rand der Innennut geschoben zu werden, wenn der Keilspannring nach links gespannt wird. Wenn das Abstandselement 47 aus Metall besteht, kann der Dichtungsring 34 mit seinem aus Gummi bestehenden Verbindungsstreifen 58 innen auf das Abstandselement 47 aufvulkanisiert werden. Der Verbindungsstreifen 58 kann aber auch mit dem Rückhaltering 18 verbunden werden.

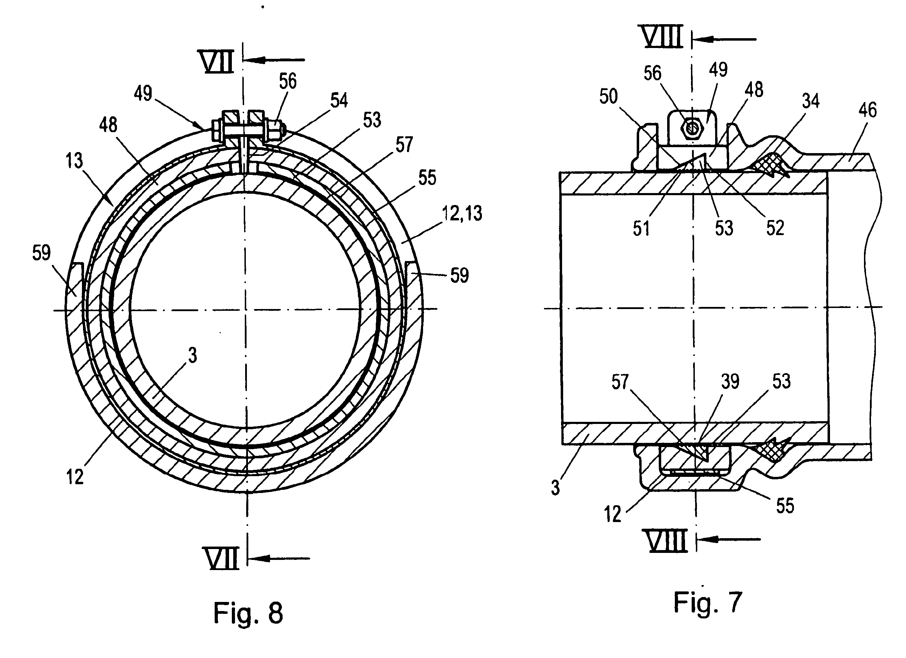

Die Figuren 7 und 8 zeigen eine weitere vorteilhafte Ausführungsform für die Ausbildung einer auszugfesten Rohrverbindung, wobei auch hier ein Rückhaltering in einer Innennut 12 der Anschlussmuffe angeordnet ist und der Rückhaltering sowie auch der Dichtungsring durch einen schlitzförmigen Wandausschnitt einführbar sind.

In Fig. 7 ist ein axialer Schnitt durch die Rohrverbindung gemäß Linie VII.VII in Fig. 8 dargestellt.

Die Rohrverbindung wird durch einen Rückhaltering hergestellt, wobei ein in die Innennut 12 eingelegter und auf das Einsteckende 2 des Rohres 3 aufgesteckter Klemmring 48 vorgesehen ist. Die Fig. 8 zeigt die vorteilhafte Ausbildung der Innennut 12, die nach oben dadurch offen ist, dass der Wandausschnitt 13 vorgesehen ist, durch den Rohrverbindungselemente, nämlich hier der Klemmring 48, eingeschoben werden können, bevor das Einsteckende des Rohres 3 eingesteckt wird.

Hervorzuheben ist, dass der Wandausschnitt 13 sich über einen Querschnittssektor erstreckt, dessen Innenwinkel kleiner als 180° ist. Damit führt die Innennut 12 im geschlossenen Bereich über einen Kreisbogenwinkel, der größer 180° ist. Um das Einschieben der Verbindungselemente für die Rohrverbindung zu erleichtern, ist eine tangentiale Abflachung 59 des Nutengrundes der Innennut 12 vorgesehen. Eine leichte Verengung des Wandausschnittes 13 kann aber vorgesehen sein, da die einzuschiebende Rohrverbindungselemente wie hier der Klemmring 48 radial geschlitzt ist und daher in seinem Durchmesser variabel ist.

Der Klemmring 48 weist an seiner der Rohrumfangsfläche zugewandten Fläche eine Ringnut 50 auf, die eine flach ansteigende Keilflanke 51 und eine steil abfallende Stop-Flanke 52 aufweist. In dieser Ringnut 50 ist ein Keilring 53 eingelegt. Der Keilring 53 ist radial geschlitzt, wie in Fig. 8 dargestellt ist, und kann daher seinen Radius verändern. Die für den Klemmring 48 vorgesehene Klemmvorrichtung 49 umfasst einen um den Klemmring herumgelegten Klemmreifen 55, der eine Zug-Schraubverbindung 56 aufweist. Durch Festziehen der Zug-Schraubverbindung 56 wird der Radius des Klemmreifens 55 verkleinert und demzufolge der Klemmring 48 gegen den Keilring 53 gedrückt, der aus hartem Material, insbesondere Metall oder anderen Materialien wie Kunststoff besteht und an seiner inneren Umfangsoberfläche 57 Rückhaltemittel 39 wie insbesondere eine Verzahnung aufweist. Die Zähne des Keilrings 53 graben sich in das Material des Einsteckendes des Rohres 3 ein und stellen damit eine auszugfeste Rohrverbindung her. Wenn es zu hohen Auszugkräften des Rohres 3 kommt, was bei hohen Drücken des Flussmediums im Rohr auftreten kann, dann bewirkt dies ein Auflaufen des Keilrings 53 auf die Keilflanke 51, wodurch der Keilring 53 noch fester gegen das Rohr 3 gedrückt und die Rohrverbindung somit verfestigt wird.

Die Rohrverbindung gemäß den Fig. 7 und 8 benötigt so wie bei der Ausführung gemäß Fig.1 und 2 keine über das Gehäuse oder die Rohrmuffe aufgebrachten Spannkräfte. Die Spannung der Rohrverbindung funktioniert unabhängig vom Gehäuse oder Rohrmuffe.

Der Ordnung halber sei abschließend darauf hingewiesen, dass zum besseren Verständnis des Aufbaus der Rohrverbindung diese bzw. deren Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

### Bezugszeichenaufstellung

- 1: Rohrverbindung
- 2: Einsteckende des Rohres
- 3: Rohr
- 4: Anschlussmuffe
- 5: Gehäuse
- 6: Schieber
- 7: Muffenöffnung
- 8: Außendurchmesser
- 9: Innendurchmesser
- 10: Endbereich
- 11: Muffenabschnitt
- 12: Innennut
- 13: Wandausschnitt
- 14: Ausformung
- 15: Einformung
- 16: Breite
- 17: Breite
- 18: Rückhaltering
- 19: Breite
- 20: Ringhöhe
- 21: Nuttiefe
- 22: Widerstand-Heizelement
- 23: Elektroanschluss
- 24: Bohrungsansatz
- 25: Überstand
- 26: Oberfläche
- 27: Innendurchmesser
- 28: Rohrstimfläche
- 29: Ringfläche
- 30: Energieerzeuger
- 31: Leitung
- 32: Pfeil
- 33: Ringnut
- 34: Dichtungsring
- 35: Lippendichtring
- 36: Schlitzweite
- 37: Aussendurchmesser
- 38: Innenoberfläche
- 39: Rückhaltemittel
- 40: Ansatz
- 41: Keilspannring
- 42: Innenfläche
- 43: Spannschraube
- 44: Wulstrand
- 45: Brückenelement
- 46: Anschlussrohr
- 47: Abstandelement
- 48: Klemmring
- 49: Klemmvorrichtung
- 50: Ringnut
- 51: Keilflanke
- 52: Stop-Flanke
- 53: Keilring
- 54: radialer Schlitz
- 55: Klemmreifen
- 56: Zug-Schraubverbindung
- 57: innere Umfangsoberfläche
- 58: Verbindungsstreifen
- 59: tangentiale Abflachung

## Patentansprüche

1. Rohrverbindung (1) für einen auszugfesten Anschluss eines Einsteckendes (2) eines Rohres (3) an eine Anschlussmuffe (4) mit einem das Einsteckende (2) am Umfang umfassenden und in einer Innennut (12) der Anschlussmuffe (4) angeordneten Rückhaltering (18), wobei das Einsteckende (2) den Rückhaltering (18) um einen Überstand (25) in Einsteckrichtung des Rohrendes überragt und benachbart zur Innennut (12) in Einsteckrichtung des Rohrendes beabstandet in einer Ringnut (33) ein das Einsteckende (2) umfangsseitig umfassender Dichtungsring (34), bevorzugt ein Lippen-Dichtring (35) angeordnet ist und die Anschlussmuffe (4) über einen Teilbereich des Umfangs des die Innennut (12) aufweisenden Muffenabschnitts (11) einen das radiale Einsetzen des Rückhalterings (18) erlaubenden schlitzförmigen Wandausschnitt (13) aufweist, wobei der Wandausschnitt (13) sich über einen Querschnittssektor erstreckt, dessen Innenwinkel kleiner als 180° ist, **dadurch gekennzeichnet, dass** der Rückhaltering (18) entweder als mit dem Einsteckende (2) durch einen Anschmelzvorgang thermisch verbindbarer Kunststoffring, in dem ein elektrisches Heizelement (22) angeordnet ist, oder als ein in die Innennut (12) einlegbarer und auf das Einsteckende (2) des Rohres (3) aufsteckbarer Klemmring (48), der durch eine Klemmvorrichtung (49) auf das Rohr anklemmbar ist, ausgeführt ist.

2. Rohrverbindung (1) nach Anspruch 1, **dadurch gekennzeichnet, dass** zumindest ein den schlitzförmigen Wandausschnitt (13) in axialer Richtung überspannendes und beidseits des Wandausschnitts (13) des Muffenabschnittes verankertes Brückenelement (45) vorgesehen ist.

3. Rohrverbindung (1) nach einem der vorgehenden Ansprüche, **dadurch gekennzeichnet, dass** eine tangentiale Abflaschung (59) des Nutengrundes der Innennut (12) vorgesehen ist.

4. Rohrverbindung (1) nach einem der vorgehenden Ansprüche, **dadurch gekennzeichnet, dass** eine Verengung des Wandausschnittes (13) vorgesehen ist.

5. Rohrverbindung (1) nach Anspruch 2, **dadurch gekennzeichnet, dass** das Brückenelement (45) lösbar am Muffenabschnitt befestigt, insbesondere mit diesem verschraubt ist.

6. Rohrverbindung (1) nach einem der vorher genannten Ansprüche, **dadurch gekennzeichnet, dass** der Rückhaltering (18) in radialer Richtung elastisch verformbar ausgebildet ist.

7. Rohrverbindung (1) nach einem der vorher genannten Ansprüche, **dadurch gekennzeichnet, dass** der Rückhaltering (18) an einer inneren Umfangsoberfläche (38) mit verzahnungsartigen Rückhaltemitteln (39) versehen ist.

8. Rohrverbindung (1) nach Anspruch 7, **dadurch gekennzeichnet, dass** die Rückhaltemittel (39) durch in den Rückhaltering (18) eingeformte, insbesondere hochfeste, an der inneren Umfangsoberfläche (38) eine Verzahnung aufweisende Einformelemente gebildet sind.

9. Rohrverbindung (1) nach Anspruch 8, **dadurch gekennzeichnet, dass** die Rückhaltemittel (39) aus einem zum Material des Rückhalteringes (18) eine höhere Festigkeit aufweisendem Material, insbesondere aus einem metallischen Werkstoff bestehen.

10. Rohrverbindung (1) nach einem der vorhergehenden Ansprüche, **dadurch gekennzeichnet, dass** der Rückhaltering (18) über einen Keilspannring (41) in radialer Richtung gegen die äußere Rohrumfangsfläche gepresst oder pressbar ist.

11. Rohrverbindung (1) nach Anspruch 10, **dadurch gekennzeichnet, dass** der Keilspannring (41) in axialer Richtung verstellbar mit der Anschlussmuffe verbunden ist.

12. Rohrverbindung (1) nach Anspruch 10 oder 11, **dadurch gekennzeichnet, dass** der Keilspannring (41) über einen Flansch und diesen durchragenden Spannschrauben (43) und in der Anschlussmuffe angeordneten stirnseitigen Gewindebohrungen verstellbar befestigt ist.

13. Rohrverbindung (1) nach Anspruch 1, **dadurch gekennzeichnet, dass** der Rückhaltering (18) durch Kreisbogenringsegmente gebildet ist.

14. Rohrverbindung (1) nach Anspruch 1, **dadurch gekennzeichnet, dass** die Breite (16) des Wandausschnitts (13) etwa der Breite (17) der Innennut (12) entspricht.

15. Rohrverbindung (1) nach Anspruch 1, **dadurch gekennzeichnet, dass** die Schlitzweite (36) des Wandausschnitts (13) kleiner ist als der Außendurchmesser (37) des Rückhalteringes (18).

16. Rohrverbindung (1) nach Anspruch 1, **dadurch gekennzeichnet, dass** der Muffenabschnitt (11) rohrförmig ausgebildet ist.

17. Rohrverbindung (1) nach Anspruch 1, **dadurch gekennzeichnet, dass** der Muffenabschnitt (11) eine ovale oder mehreckige Querschnittsform aufweist.

18. Rohrverbindung (1) nach Anspruch 1, **dadurch gekennzeichnet, dass** der Rückhaltering (18) C-förmig ausgebildet ist.

19. Rohrverbindung (1) nach Anspruch 1, **dadurch gekennzeichnet, dass** der Rückhaltering (18) über einen Teilbereich seiner Breite (19) über einen Umfang verteilt radial verlaufende Einschnitte aufweist.

20. Rohrverbindung nach Anspruch 1, **dadurch gekennzeichnet, dass** im Bereich des Wandausschnittes (13) zumindest ein, in axialer Richtung verlaufender, einen Wulstrand (44) mit dem Muffenabschnitt (11) verbindender Zuganker, z.B. Schraube, angeordnet ist.

21. Rohrverbindung (1) nach Anspruch 1, **dadurch gekennzeichnet, dass** der Rückhaltering (18) mit dem Dichtungsring (34) verbunden und durch einen Zweikomponenten-Spritzteil gebildet ist.

22. Rohrverbindung (1) nach einem der vorher genannten Ansprüche, **dadurch gekennzeichnet, dass** die Anschlussmuffe (4) Bestandteil eines Anschlussrohres (46) ist.

23. Rohrverbindung (1) nach einem der vorher genannten Ansprüche 1-21, **dadurch gekennzeichnet, dass** die Anschlussmuffe (4) Bestandteil eines Gehäuses (5) wie Ventilgehäuse, Schiebergehäuse und dergleichen ist.

24. Rohrverbindung (1) nach einem der Ansprüche 1 bis 23, **dadurch gekennzeichnet, dass** das Gehäuse (5) oder Anschlussrohr aus Kunststoff gebildet ist.

25. Rohrverbindung (1) nach einem der Ansprüche 1 bis 23, **dadurch gekennzeichnet, dass** das Gehäuse (5) oder Anschlussrohr aus metallischem Werkstoff, insbesondere aus einem Gusswerkstoff besteht.

26. Rohrverbindung nach einem der vorhergehenden Ansprüche, **dadurch gekennzeichnet, dass** zwischen Rückhaltering (18) und der Stirnfläche der Muffenöffnung ein Abstandselement (47) vorgesehen ist.

27. Rohrverbindung nach Anspruch 26, **dadurch gekennzeichnet, dass** das Abstandselement (47) ein, gegebenenfalls geschlitzter, Ring aus druckfestem Material, bevorzugt Metall, ist.

28. Rohrverbindung nach einem der vorhergehenden Ansprüche 26 oder 27, **dadurch gekennzeichnet, dass** der Dichtungsring mit dem Abstandselement (47) und/oder dem Rückhaltering (18) verbunden ist.

29. Rohrverbindung nach einem der vorhergehenden Ansprüche, **dadurch gekennzeichnet, dass** der Klemmring (48) an seiner der Rohrumfangsfläche zugewandeten Fläche eine Ringnut (50) aufweist, die eine flach ansteigende Keilflanke (51) und eine steil abfallende Stop-Flanke (52) und darin eingelegt einen Keilring (53) aufweist.

30. Rohrverbindung nach Anspruch 29, **dadurch gekennzeichnet, dass** der Keilring (53) einen durch Druck in radialer Richtung veränderbaren Radius aufweist und dazu bevorzugt einen radialen Schlitz (54) aufweist.

31. Rohrverbindung nach einem der vorhergehenden Ansprüche, **dadurch gekennzeichnet, dass** die Klemmvorrichtung (49) einen um den Klemmring herumgelegten Klemmreifen (55) mit einer Zug-Schraubverbindung (56) aufweist.

32. Rohrverbindung nach einem der vorhergehenden Ansprüche, **dadurch gekennzeichnet, dass** der Dichtungsring (34) aus einem zum Material des Rückhalterings (18) eine höhere Elastizität aufweisendem Material gebildet ist.

## Claims

1. Tube connection (1) for the attachment, in a manner resistant to pulling out, of an insertion end (2) of a tube (3) to a connecting collar (4) with a retaining ring (18) that grips the insertion end (2) around its periphery and is arranged in an inner groove (12) of the connecting collar (4), wherein the insertion end (2) projects over the retaining ring (18) by an overhang (25) in the direction of insertion of the tube end, and a sealing ring (34), preferably a lip-type sealing ring (35), that circumferentially surrounds the insertion end (2) is arranged in an annular groove (33) adjacent to the inner groove (12) and at a spacing therefrom, in the direction of insertion of the tube end, and the connecting collar (4) comprises, over a partial region of the circumference of the collar portion (11) comprising the inner groove (12), a slot-like cut-out (13) in the wall, enabling the retaining ring (18) to be inserted radially, the wall cut-out (13) extending over a cross-sectional sector the internal angle of which is less than 180°, **characterised in that** the retaining ring (18) is either embodied as a plastics ring in which an electrical heating element (22) is provided and which can be thermally bonded to the insertion end (2) by means of a melting process, or as a clamping ring (48) that can be placed into the internal groove (12) and fitted onto the insertion end (2) of the tube (3), said clamping ring being adapted to be clamped onto the tube by a clamping device (49).

2. Tube connection (1) according to claim 1, **characterised in that** at least one bridge element (45) is provided that axially spans the slot-shaped wall cut-out (13) and is anchored on both sides of the wall cut-out (13) of the collar portion.

3. Tube connection (1) according to one of the preceding claims, **characterised in that** a tangential flattening (59) of the base of the inner groove (12) is provided.

4. Tube connection (1) according to one of the preceding claims, **characterised in that** a narrowing of the wall cut-out (13) is provided.

5. Tube connection (1) according to claim 2, **characterised in that** the bridge element (45) is releasably attached to the collar portion, more particularly screwed thereto.

6. Tube connection (1) according to one of the preceding claims, **characterised in that** the retaining ring (18) is configured to be elastically deformable in the radial direction.

7. Tube connection (1) according to one of the preceding claims, **characterised in that** the retaining ring (18) is provided, on an inner circumferential surface (38), with teeth-like retaining means (39).

8. Tube connection (1) according to claim 7, **characterised in that** the retaining means (39) are formed by, in particular high-strength, moulded elements comprising teeth on their inner circumferential surface (38), which are moulded into the retaining ring (18).

9. Tube connection (1) according to claim 8, **characterised in that** the retaining means (39) consist of a material having a higher strength than the material of the retaining ring (18), particularly a metallic material.

10. Tube connection (1) according to one of the preceding claims, **characterised in that** the retaining ring (18) is pressed, or adapted to be pressed, over a tapered clamping ring (41) in the radial direction against the outer circumferential surface of the tube.

11. Tube connection (1) according to claim 10, **characterised in that** the tapered clamping ring (41) is connected to the connecting collar so as to be adjustable in the axial direction.

12. Tube connection (1) according to claim 10 or 11, **characterised in that** the tapered clamping ring (41) is adjustably secured by means of a flange and fixing screws (43) projecting through said flange and threaded bores arranged end-on in the connecting collar.

13. Tube connection (1) according to claim 1, **characterised in that** the retaining ring (18) is formed by arc-shaped ring segments.

14. Tube connection (1) according to claim 1, **characterised in that** the width (16) of the wall cut-out (13) corresponds substantially to the width (17) of the inner groove (12).

15. Tube connection (1) according to claim 1, **characterised in that** the slot width (36) of the wall cut-out (13) is smaller than the external diameter (37) of the retaining ring (18).

16. Tube connection (1) according to claim 1, **characterised in that** the collar portion (11) is of tubular configuration.

17. Tube connection (1) according to claim 1, **characterised in that** the collar portion (11) has an oval or polygonal cross-sectional shape.

18. Tube connection (1) according to claim 1, **characterised in that** the retaining ring (18) is of C-shaped configuration.

19. Tube connection (1) according to claim 1, **characterised in that** the retaining ring (18) has radially extending indentations over part of its width (19) that are distributed over a circumference.

20. Tube connection according to claim 1, **characterised in that** at least one axially extending tie-rod, e.g. a screw, that connects a ring collar (44) to the collar portion (11) is arranged in the region of the wall cut-out (13).

21. Tube connection (1) according to claim 1, **characterised in that** the retaining ring (18) is connected to the sealing ring (34) and is formed by a two-component injection moulded part.

22. Tube connection (1) according to one of the preceding claims, **characterised in that** the connecting collar (4) is part of a connecting tube (46).

23. Tube connection (1) according to one of the preceding claims 1 to 21, **characterised in that** the connecting collar (4) is part of a housing (5) such as a valve housing, slide valve housing and the like.

24. Tube connection (1) according to one of claims 1 to 23, **characterised in that** the housing (5) or connecting tube is formed from plastics.

25. Tube connection (1) according to one of claims 1 to 23, **characterised in that** the housing (5) or connecting tube consists of metallic material, particularly a cast material.

26. Tube connection according to one of the preceding claims, **characterised in that** between the retaining ring (18) and the end face of the collar opening a spacer element (47) is provided.

27. Tube connection according to claim 26, **characterised in that** the spacer element (47) is an optionally slotted ring of compression-resistant material, preferably metal.

28. Tube connection according to one of the preceding claims 26 or 27, **characterised in that** the sealing ring is connected to the spacer element (47) and/or the retaining ring (18).

29. Tube connection according to one of the preceding claims, **characterised in that** the clamping ring (48) comprises, on its surface facing the circumferential surface of the tube, an annular groove (50) which has a shallowly rising tapered flank (51) and a steeply descending stop flank (52) and a tapered ring (53) placed therein.

30. Tube connection according to claim 29, **characterised in that** the tapered ring (53) has a radius that can be varied by pressure in the radial direction and for this purpose preferably has a radial slot (54).

31. Tube connection according to one of the preceding claims, **characterised in that** the clamping device (49) comprises a clamping hoop (55) with a tensioning screw connection (56) placed around the clamping ring.

32. Tube connection according to one of the preceding claims, **characterised in that** the sealing ring (34) is formed from a material that has a higher elasticity than the material of the retaining ring (18).

## Revendications

1. Raccord de tube (1) pour un raccordement résistant à l'extraction d'une extrémité enfichable (2) d'un tube (3) à un manchon de raccordement (4), avec une bague de retenue (18) entourant l'extrémité enfichable (2) sur sa circonférence et disposée dans une rainure intérieure (12) du manchon de raccordement (4), l'extrémité enfichable (2) dépassant de la bague de retenue (18) d'une saillie (25) dans la direction d'enfichage de l'extrémité du tube, et une bague d'étanchéité (34), de préférence une bague d'étanchéité à lèvre (35), qui entoure circonférentiellement l'extrémité d'enfichage (2) étant disposée dans une rainure annulaire (33), voisine de la rainure intérieure (12) et à une certaine distance de celle-ci dans la direction d'enfichage de l'extrémité du tube, et le manchon de raccordement (4) présentant, sur une zone partielle de la circonférence de la portion de manchon (11) pourvue de la rainure intérieure (12), une découpe de paroi (13) en forme de fente qui permet l'insertion radiale de la bague de retenue (18), la découpe de paroi (13) s'étendant sur un secteur de coupe transversale dont l'angle intérieur est inférieur à 180°, **caractérisé en ce que** la bague de retenue (18) est réalisée soit sous la forme d'une bague en matière plastique qui peut être reliée thermiquement à l'extrémité d'enfichage (2) au moyen d'un processus de fusion, un élément chauffant électrique (22) étant disposé dans ladite bague, soit sous la forme d'une bague de serrage (48) qui peut être insérée dans la rainure intérieure (12) et montée sur l'extrémité d'enfichage (2) du tube (3), laquelle bague de serrage peut être serrée sur le tube au moyen d'un dispositif de serrage (49).

2. Raccord de tube (1) selon la revendication 1, **caractérisé en ce qu'**au moins un élément de pont (45), qui s'étend par-dessus la découpe de paroi (13) en forme de fente dans la direction axiale et est ancré des deux côtés de la découpe de paroi (13) de la portion de manchon, est prévu.

3. Raccord de tube (1) selon une des revendications précédentes, **caractérisé en ce qu'**un aplatissement tangentiel (59) du fond de rainure de la rainure intérieure (12) est prévu.

4. Raccord de tube (1) selon une des revendications précédentes, **caractérisé en ce qu'**un rétrécissement de la découpe de paroi (13) est prévu.

5. Raccord de tube (1) selon la revendication 2, **caractérisé en ce que** l'élément de pont (45) est fixé à la portion de manchon de manière détachable, en particulier vissé avec celui-ci.

6. Raccord de tube (1) selon une des revendications précédentes, **caractérisé en ce que** la bague de retenue (18) est conçue pour être déformable élastiquement dans la direction radiale.

7. Raccord de tube (1) selon une des revendications précédentes, **caractérisé en ce que** la bague de retenue (18) est pourvue de moyens de retenue (39) en forme de denture sur sa surface périphérique intérieure (38).

8. Raccord de tube (1) selon la revendication 7, **caractérisé en ce que** les moyens de retenue (39) sont formés par des éléments moulés dans la bague de retenue (18), en particulier par des éléments moulés à haute résistance présentant une denture sur leur surface périphérique intérieure (38).

9. Raccord de tube (1) selon la revendication 8, **caractérisé en ce que** les moyens de retenue (39) sont constitués d'un matériau qui possède une résistance mécanique plus élevée que le matériau de la bague de retenue (18), en particulier d'un matériau métallique.

10. Raccord de tube (1) selon une des revendications précédentes, **caractérisé en ce que** la bague de retenue (18) est pressée ou peut être pressée dans la direction radiale contre la surface périphérique extérieure du tube au moyen d'une bague de serrage conique (41).

11. Raccord de tube (1) selon la revendication '10, **caractérisé en ce que** la bague de serrage conique (41) est reliée au manchon de raccordement de manière réglable dans la direction axiale.

12. Raccord de tube (1) selon la revendication 10 ou 11, **caractérisé en ce que** la bague de serrage conique (41) est fixée de manière réglable au moyen d'une bride et de vis de serrage (43) qui traversent celle-ci ainsi que de trous filetés frontaux disposés dans le manchon de raccordement.

13. Raccord de tube (1) selon la revendication 1, **caractérisé en ce que** la bague de retenue (18) est formée par des segments annulaires en arc de cercle.

14. Raccord de tube (1) selon la revendication 1, **caractérisé en ce que** la largeur (16) de la découpe de paroi (13) correspond à peu près à la largeur (17) de la rainure intérieure (12).

15. Raccord de tube (1) selon la revendication 1, **caractérisé en ce que** la largeur de fente (36) de la découpe de paroi (13) est plus petite que le diamètre extérieur (37) de la bague de retenue (18).

16. Raccord de tube (1) selon la revendication 1, **caractérisé en ce que** la portion de manchon (11) est conformée en tube.

17. Raccord de tube (1) selon la revendication 1, **caractérisé en ce que** la portion de manchon (11) possède, en coupe transversale, une forme ovale ou polygonale.

18. Raccord de tube (1) selon la revendication 1, **caractérisé en ce que** la bague de retenue (18) est conformée en C.

19. Raccord de tube (1) selon la revendication 1, **caractérisé en ce que** la bague de retenue (18) présente, sur une zone partielle de sa largeur (19), des entailles d'extension radiale qui sont réparties sur sa circonférence.

20. Raccord de tube selon la revendication 1, **caractérisé en ce qu'**au moins un tirant d'ancrage, par exemple une vis, qui s'étend dans la direction axiale et relie un bord bombé (44) à la portion de manchon (11), est disposé dans la zone de la découpe de paroi (13).

21. Raccord de tube (1) selon la revendication 1, **caractérisé en ce que** la bague de retenue (18) est reliée à la bague d'étanchéité (34) et est formée par une pièce moulée par injection à deux composants.

22. Raccord de tube (1) selon une des revendications précédentes, **caractérisé en ce que** le manchon de raccordement (4) fait partie d'un tube de raccordement (46).

23. Raccord de tube (1) selon une des revendications précédentes 1 à 21, **caractérisé en ce que** le manchon de raccordement (4) fait partie d'un boîtier (5) tel qu'un boîtier de vanne, boîtier de tiroir et analogues.

24. Raccord de tube (1) selon une des revendications 1 à 23, **caractérisé en ce que** le boîtier (5) ou le tube de raccordement est formé d'une matière plastique.

25. Raccord de tube (1) selon une des revendications 1 à 23, **caractérisé en ce que** le boîtier (5) ou le tube de raccordement est formé d'un matériau métallique, en particulier d'un matériau coulé.

26. Raccord de tube selon une des revendications précédentes, **caractérisé en ce qu'**un élément d'écartement (47) est prévu entre la bague de retenue (18) et la surface frontale de l'ouverture de manchon.

27. Raccord de tube selon la revendication 26, **caractérisé en ce que** l'élément d'écartement (47) est une bague, le cas échéant une bague fendue, en matériau résistant à la pression, de préférence en métal.

28. Raccord de tube selon une des revendications précédentes 26 ou 27, **caractérisé en ce que** la bague d'étanchéité est reliée à l'élément d'écartement (47) et/ou à la bague de retenue (18).

29. Raccord de tube selon une des revendications précédentes, **caractérisé en ce que**, sur sa surface tournée vers la surface périphérique du tube, la bague de serrage (48) présente une rainure annulaire (50) qui possède un flanc conique à faible pente ascendante (51) et un flanc d'arrêt à forte pente descendante (52) et une bague conique (53) insérée dans celle-ci.

30. Raccord de tube selon la revendication 29, **caractérisé en ce que** la bague conique (53) possède un rayon qui peut être modifié par pression dans la direction radiale et, à cet effet, présente de préférence une fente radiale (54).

31. Raccord de tube selon une des revendications précédentes, **caractérisé en ce que** le dispositif de serrage (49) comporte, disposé autour de la bague de serrage, un cercle de serrage (55) avec un raccord à vis de traction (56).

32. Raccord de tube selon une des revendications précédentes, **caractérisé en ce que** la bague d'étanchéité (34) est formée d'un matériau qui présente une élasticité supérieure à celle du matériau de la bague de retenue (18).
